# EUROPEAN PATENT SPECIFICATION

(11) **EP 2 303 785 B1**
(45) Date of publication and mention of the grant of the patent: **26.06.2019**
(21) Application number: 09759139.0
(22) Date of filing: 30.05.2009
(51) Int. Cl.: C02F 5/10

(54) **METHOD FOR INHIBITING THE FORMATION AND DEPOSITION OF SILICA SCALE IN AQUEOUS SYSTEMS**
VERFAHREN ZUR INHIBIERUNG DER BILDUNG UND ABSCHEIDUNG VON KIESELSÄUREABLAGERUNGEN IN WÄSSRIGEN SYSTEMEN
PROCEDE PERMETTANT D'INHIBER LA FORMATION ET LE DEPOT DE TARTRE DE SILICE DANS DES SYSTEMES D'ALIMENTATION EN EAU

(30) Priority: 02.06.2008 US 131571
(43) Date of publication of application: 06.04.2011
(73) Proprietor: Nalco Company, Naperville, IL 60563-1198 (US)
(72) Inventor: GILL, Jasbir, S., Naperville IL 60564 (US); KIDMABI, Srikanth, S., Palatine IL 60067 (US); FUN-YUEE LU, Frank, Naperville IL 60540 (US); MORRIS, John, D., Naperville IL 60540 (US)
(74) Representative: HGF Limited
(86) International application number: PCT/US2009/045757
(87) International publication number: WO 2009/148978

(56) References cited:
- US-A- 5 180 498
- US-A- 5 708 108

## Description

### TECHNICAL FIELD

This invention generally relates to silica scale inhibitors. More specifically, this invention relates to a method for inhibiting the formation and deposition of silica and silicate compounds in water systems with water-soluble polymers comprising polyoxyalkylene groups.

### BACKGROUND OF THE INVENTION

In many parts of the world, amorphous silica scales cause significant fouling problems when industrial waters contain high quantities of silica. For the most part, high quantities of silica means that the industrial waters contain at least 5 ppm and up to about 500 ppm dissolved silica and may contain higher quantities of silica either in dissolved, dispersed or colloidal forms.

The solubility of silica adversely limits the efficient use of water in industrial applications, such as cooling, boiler, geothermal, reverse osmosis and papermaking. Specifically, water treatment operations are limited because the solubility of silica at about 150 ppm can be exceeded when minerals are concentrated during processing. This can result in the precipitation and deposition of amorphous silica and silicates with consequential loss of equipment efficiency. Moreover, the accumulation of silica on internal surfaces of water treatment equipment, such as boilers, cooling, and purification systems, reduces heat transfer and fluid flow through heat exchange tubes and membranes.

Once the silica scale forms on water treatment equipment, the removal of such scale is very difficult and costly. With high silica water, therefore, cooling and reverse osmosis systems typically operate at low water-use efficiency to assure that the solubility of silica is not exceeded. Under these conditions, however, reverse osmosis systems must limit their pure water recovery rate and cooling systems must limit water recycling. In both cases, water discharge volumes are large.

Various additives have been employed over the years to inhibit silica deposition. The current technologies for silica scale control in industrial cooling systems involve the use of either colloidal silica dispersants or silica polymerization inhibitors. US Patent No. 5 445 758 to Chen et al. relates to the use for boiler systems of scale inhibitors with polymeric backbones similar to those of present invention. Dispersant technologies have shown little activity, being able to stabilize only slight increases of total silica in a tower. For instance, by feeding a dispersant, silica levels may increase from 150-200 to 180-220 ppm, which is often an undetectable increase in silica cycles.

On the other hand silica polymerization inhibitors have shown to be more effective against silica scale deposition. For example, U.S. Patent No. 4,532,047 to Dubin relates to the use of a water-soluble low molecular weight polypolar organic compound for inhibiting amorphous silica scale formation on surfaces in contact with industrial waters. Likewise, U.S. Patent No. 5,658,465 to Nicholas et al relates to the use of polyoxazoline as a silica scale inhibition technology. These polymerization inhibitors have allowed for increases in soluble silica to greater than 300 ppm without scale formation.

### SUMMARY OF THE INVENTION

This invention provides an improved method for inhibiting the formation and deposition of silica and silicate compounds in water systems. The inventors have discovered that certain soluble polymers containing poly(alkylene oxide) groups are effective inhibitors of soluble silica polymerization and scale deposition in water systems.

Accordingly, in an embodiment, this invention is a method as defined in the appended claims.

### DETAILED DESCRIPTION

Polymer suitable for use in this invention are prepared by polymerizing one or more monomers of formula I: 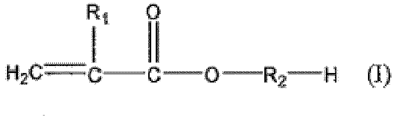 where R₁ and R₂ are defined herein and optionally up to 5 mole percent of one or more monomers having a polymerizable carbon-carbon double bond. The polymerization may proceed in accordance with solution, emulsion, micelle or dispersion polymerization techniques. Conventional polymerization initiators such as persulfates, peroxides, and azo type initiators may be used. Polymerization may also be initiated by radiation or ultraviolet mechanisms. Chain transfer agents such as alcohols, preferably isopropanol or allyl alcohol, amines or mercapto compounds may be used to regulate the molecular weight of the polymer. Branching agents such as methylene bisacrylamide, or polyethylene glycol diacrylate and other multifunctional crosslinking agents may be added. The resulting polymer may be isolated by precipitation or other well-known techniques. If polymerization is in an aqueous solution, the polymer may simply be used in the aqueous solution form.

Monomers of formula I can be prepared by alkoxylation of (meth)acrylate esters. These compounds are also commercially available, for example from Aldrich, Milwaukee, WI.

Alternatively, the polymers can be prepared by treating poly (meth)acrylic acid and its salts with alkylene oxides to produce polymeric esters with such catalysts as pyridine or NaOH and the 2-hydroxyalky ester has sites for the further reaction of alkylene groups resulting in the formation of grafter polyoxyethylene side chains on a backbone of poly (meth)acrylic acid. See U.S. Patent No. 4,435,556 and references cited therein.

In an embodiment, the polymer has a weight average molecular weight of about 20,000 to about 80,000. In other embodiments, the polymer has a weight average molecular weight of about 5,000 to about 50,000 or from about 10,000 to about 30,000.

In an embodiment, the monomers comprising a polymerizable carbon-carbon double bond are selected from (meth)acrylic acid and its salts, (meth)acrylamide, N-methyl acrylamide, N,N-dimethylacrylamide, N-isopropyl acrylamide, N-t-butyl acrylamice, N,N-dimethylaminoethyl (meth)acrylate and is salts, maleic acid, maleic anhydride, fumaric acid, itaconic acid, styrene sulfonic acid, vinyl sulfonic acid, isopropenyl phosphonic acid, vinyl phosphonic acid, vinylidene diphosphonic acid and 2-acrlamido-2-methylpropoae sulfonic acid and its salts.

In an embodiment, the polymer has formula 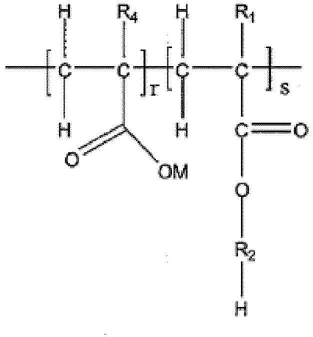 wherein r is 2 mole percent, s is 98 mole percent; R₁ is methyl (C1 alkyl) and R₄ is H; R₂ is a group of formula -(CH₂-CHR₃-O)ₙ-; R₃ is H; M is H or a water soluble cation; and n is 2 to about 25.

This invention provides methods for inhibiting the formation and deposition of silica and silicate compounds in water systems. The methods include adding to the water in a water system an effective amount inhibiting amount of a polymer according to this invention.

The polymers may be added directly into the water system being treated as an aqueous solution intermittently or continuously.

The industrial waters that require treatment with the polymers of this invention are generally waters that contain silica in a dissolved, suspended or colloidal form. The silica is present as dissolved, siliclic species, silicates or their complex ions and may also be present as colloidal silica or suspended silica. The total silica concentration in these industrial waters is normally low. When it exceeds about 120-150 ppm in total concentration; amorphous silica scale formation then becomes a problem. However, in the presence of common cations, such as Ca, Mg, Zn,Al, Se, etc, present in the water, much lower level of silica can cause scaling/deposition problems. Obviously, the higher the concentration of total silica from all sources in these waters, the more difficult is the problem created by amorphous silica scale formation.

The industrial waters are pulp and paper mill waters. The problem of amorphous silica scale formation on the surfaces in contact with these industrial waters is particularly noted when the industrial waters are alkaline, having a pH of at least 5.0 or above, and contain at least 5 ppm total silica as SiO₂. The effective use of the polymers of this invention are preferably at pH's of at least 5.0 and above and may be at temperatures ranging between ambient temperatures to temperatures in excess of 260 °C (500 °F). However, as one skilled in the art of water treatment would appreciate, the polymers of this invention should also be effective in waters having a pH lower than 5.0.

Of particular importance is the treatment of alkaline industrial waters being used as cooling waters, either on a once-through basis or particularly in a recirculating cooling water system. When these alkaline cooling waters contain sufficient total silica, the problem of amorphous silica scale formation on surfaces in contact with these cooling waters is exaggerated. As the alkalinity increases, the problem of amorphous silica scale formation also increases. Therefore, the effectiveness of the polymers used in this invention must also be demonstrated at pH's in excess of about 8.0.

Finally, the polymers of this invention may be combined with other water treating agents. For example, the polymers may be used with water treatments, such as those used to inhibit corrosion and those treatments used to disperse or prevent scale formation of other types.

Representative scale inhibitors include, but are not limited to, inorganic and organic polyphosphate, phosphonates, and polycarboxylates. These inhibitors help inhibit or disperse other scales such as calcium carbonate, calcium sulfate, calcium phosphate, calcium fluoride, barium sulfate, calcium oxalate, and the like. Inhibition of these scales helps the polymer reach its full potential for inhibiting silica/silicate deposit.

Inorganic polyphosphates include compounds composed of phosphate units linked by phosphoanhydride bonds as shown in the following formula 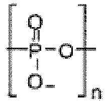 where n = 2-20

Organic polyphosphates (polymeric organic phosphate) include esters of polyphosphates as shown in the following formula 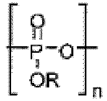 where R is substituted or unsubstituted alkyl or aryl and n = 2-20. Representative inorganic and organic polyphosphates include sodium tripolyphosphate, sodium hexametaphosphates, anionic silicone phosphate ester, alkyl phosphate esters, and the like.

Phosphonates include compounds containing the structural moiety 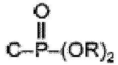 where R is H or substituted or unsubstituted alkyl or aryl. Representative phosphonates include commercially available products including HEDP (1-hydroxy ethylidene 1,1-diphosphomic acid and its salts), AMP (amino tri(methylene phosphonic acid) and its salts), PAPEMP (polyamino polyether methylene phosphonic acid and its salts), and the like.

Polycarboxylates comprise polymers composed of monomers containing carboxylic acid functional group or salts thereof including, for example, acrylic acid, methacrylic acid, α-haloacrylic acid, maleic acid or anhydride, vinylacetic acid, allylacetic acid, fumaric acid, and β-carboxylethylacrylate, and the like. Representative polycarboxylates include low molecular weight commercially available water soluble polyacrylic acid, polymaleic acid, acrylic acid-AMP copolymers, and the like.

Polyphosphate, phosphonates and polycarboxylates and their use for inhibiting scale is known in the art. See, for example, U.S. Patents 4,874,527, 4,933,090 and 5,078,879.

The foregoing can be better understood by reference to the following examples, which are presented for purposes of illustration and are not intended to limit the scope of the invention.

### Example 1

### Beaker Studies

Beaker studies are done by making a solution using sodium meta silicate that will yield starting concentration of 300 PPM as SiO₂. Each beaker in addition to sodium meta silicate solution contains various amounts of the inhibitor of the invention ranging from 0 - 100 PPM. The pH of each beaker is adjusted to 7.5. The samples are stirred using a magnetic stirrer and allowed to stand at room temperature. At different times aliquots are withdrawn and SiO₂ is measured spectrophotometrically using ammonium molybdate. The results are shown in Table 1.

**Table 1**

| | Silica SiO₂ PPM | |
|---|---|---|
| Time (minutes) | No Inhibitor | 20PPM Inhibitor |
| 0 | 300 | 300 |
| 10 | 230 | 300 |
| 20 | 180 | 300 |
| 30 | 160 | 290 |
| 45 | 150 | 280 |

In another set of beaker studies, calcium chloride (990 PPM as CaCO₃) and magnesium sulfate (340 PPM as CaCO₃) are added in addition to sodium meta silicate. The starting concentration of silica is 250 PPM as CaCO₃. The pH of each beaker is adjusted to 7.4. The results are shown in Table 2.

**Table 2**

| | Silica SiO₂ PPM | |
|---|---|---|
| Time (minutes) | No inhibitor | 20 PPM inhibitor |
| 0 | 250 | 250 |
| 50 | 210 | 240 |
| 100 | 145 | 220 |
| 150 | 100 | 190 |

In another set of beaker studies, calcium chloride (500 PPM as CaCO₃) and magnesium sulfate (250 PPM as CaCO₃) are added in addition to sodium meta silicate. The starting concentration of silica is 250 PPM as CaCO₃. The pH of each beaker is adjusted to 7.4. The results are shown in Table 3.

**Table 3**

| | Silica as SiO₂ PPM | | |
|---|---|---|---|
| Time (minutes) | No inhibitor | 10 PPM Inhibitor | 20 PPM Inhibitor |
| 0 | 250 | 250 | 250 |
| 50 | 160 | 225 | 240 |
| 100 | 150 | 225 | 240 |
| 150 | 140 | 220 | 220 |
| 200 | 140 | 190 | 220 |

The data in Tables 1-3 shows that the amount of soluble silica as a function of time, Ca/Mg hardness and the dose of the inhibitor. In Table 1 since there is no Ca/Mg hardness in the water, the inhibitor is able to retain higher level of soluble silica in the water. The data in Tables 2 and 3 compares the effect of hardness:the higher the hardness the lower the soluble silica (190 PPM - higher hardness vs 220 PPM - lower hardness). Similarly, the data in Table 3 shows the effect of higher dose of the inhibitor vs the lower dose of the inhibitor.

### Example 2

### Pilot Cooling Tower Study

A simulated cooling tower study is used to evaluate the efficiency of the silica inhibitor. The make up water chemistry of the tower is as follows:
84.9 g/250 gal. make up water of CaCl₂·2H₂O;
147.3 g/250 gal. make up water of MgSO₄·7H₂O;
233.8 g/250 gal. make up water of Na₂SiO₃·5H₂O; and
56 ml conc. H₂SO₄/100 gal. make up water.

The water is cycled until silica precipitation becomes apparent. The pH of the recycled up water is controlled at 7.8 and calcium carbonate precipitation is controlled using phosphonate scale inhibitor. The silica inhibitor product dose is maintained at 30 PPM.

The blank run that has no silica inhibitor shows relatively lower levels of silica and hardness before the apparent silica precipitation. This run did not have silica inhibitor but had calcium carbonate phosphonate inhibitor similar to the one for the silica inhibitor containing run. The amount of silica that can be held in solution, both soluble and colloidal also depends on the total hardness in the water. The inhibitor also helped increase the amount of hardness in addition to silica, compared to no treatment. The results are shown in Table 4.

**Table 4**

| Treatment | Maximum Hardness PPM | Maximum Total Silica PPM |
|---|---|---|
| No treatment | 600 | 200 |
| 30 PPM treatment | 700 | 270 |

It should be understood that various changes and modifications to the presently preferred embodiments described herein will be apparent to those skilled in the art. Such changes and modifications can be made without departing from this invention and without diminishing its attendant advantages. It is therefore intended that such changes and modifications be covered by the appended claims.

## Claims

1. A method for inhibiting the formation and deposition of silica and silicate compounds in paper mill water systems comprising adding to the water in the paper mill water system 10,000 to 100,000 ppm of one or more water-soluble polymers of formula: 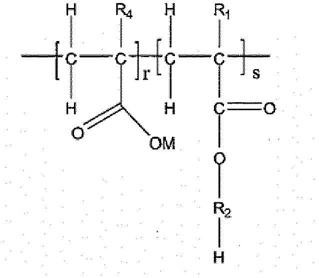 wherein r is 2 mole percent s is 98 mole percent; R₁ is methyl (C1 alkyl) R₄ is H; R₂ is a group of formula -(CH₂-CHR₃-O)ₙ-; R₃ is H; M is H or a water soluble cation; and n is 2 to 25.

2. The method of claim 1 wherein the polymer has a weight average molecular weight of 20,000 to 80,000.

3. The method of claim 1 wherein the polymer has a weight average molecular weight of 5,000 to 50,000.

4. The method of claim 1 wherein the polymer has a weight average molecular weight of 10,000 to 30,000.

5. The method of claim 1 further comprising adding one or more corrosion inhibitors, scale inhibitors or dispersants to the water system.

6. The method of claim 5 wherein the scale inhibitors or dispersants are selected from inorganic and organic polyphosphates, phosphonates and polycarboxylates.

## Patentansprüche

1. Verfahren zum Hemmen der Bildung und Ablagerung von Siliciumdioxid- und Silicatverbindungen in Papierfabrik-Wassersystemen, umfassend das Zugeben zu dem Wasser in dem Papierfabrik-Wassersystem von 10.000 bis 100.000 ppm eines oder mehrerer wasserlöslicher Polymere der Formel: 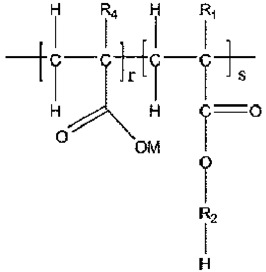 wobei r 2 Molprozent ist; s 98 Molprozent ist;
R₁ Methyl (C₁-Alkyl) ist; R₄ H ist;
R₂ eine Gruppe der Formel -(CH₂-CHR₃-O)ₙ- ist;
R₃ H ist;
M H oder ein wasserlösliches Kation ist; und
n 2 bis 25 ist.

2. Verfahren nach Anspruch 1, wobei das Polymer ein gewichtsgemitteltes Molekulargewicht von 20.000 bis 80.000 hat.

3. Verfahren nach Anspruch 1, wobei das Polymer ein gewichtsgemitteltes Molekulargewicht von 5.000 bis 50.000 hat.

4. Verfahren nach Anspruch 1, wobei das Polymer ein gewichtsgemitteltes Molekulargewicht von 10.000 bis 30.000 hat.

5. Verfahren nach Anspruch 1, ferner umfassend das Hinzufügen eines oder mehrerer Korrosionsinhibitoren, Ablagerungsinhibitoren oder Dispergiermittel zu dem Wassersystem.

6. Verfahren nach Anspruch 5, wobei die Ablagerungsinhibitoren oder Dispergiermittel aus anorganischen und organischen Polyphosphaten, Phosphonaten und Polycarboxylaten ausgewählt sind.

## Revendications

1. Procédé permettant d'empêcher la formation et le dépôt de silice et de composés de silicates dans des systèmes d'eau d'une usine de papier, consistant à ajouter à l'eau dans le système d'eau de l'usine de papier 10 000 à 100 000 ppm d'un ou plusieurs polymère(s) soluble(s) dans l'eau de formule : 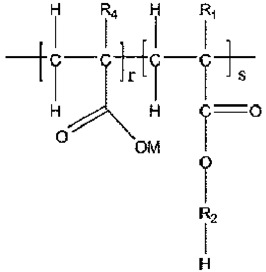 dans laquelle r est égal à 2 % en moles, et s est égal à 98 % en moles ;
R₁ est un méthyle (alkyle en C1) et R₄ est H ;
R₂ est un groupe de formule -(CH₂-CHR₃-O)ₙ-;
R₃ est H ;
M est H ou un cation soluble dans l'eau ; et
n est comprise entre 2 et 25.

2. Procédé selon la revendication 1, dans lequel le polymère a une masse moléculaire moyenne en poids de 20 000 à 80 000.

3. Procédé selon la revendication 1, dans lequel le polymère a une masse moléculaire moyenne en poids de 5 000 à 50 000.

4. Procédé selon la revendication 1, dans lequel le polymère a une masse moléculaire moyenne en poids de 10 000 à 30 000.

5. Procédé selon la revendication 1, consistant en outre à ajouter un ou plusieurs inhibiteurs de corrosion, inhibiteurs de tartre ou dispersants au système d'eau.

6. Procédé selon la revendication 5, dans lequel les inhibiteurs de tartre ou dispersants sont choisis parmi les polyphosphates, les phosphonates et les polycarboxylates inorganiques et organiques.
